# EUROPEAN PATENT APPLICATION

(11) **EP 4 611 137 A1**
(43) Date of publication of application: **03.09.2025**
(21) Application number: 24197898.0
(22) Date of filing: 02.09.2024
(51) Int. Cl.: H01M 50/204, H01M 50/236, H01M 50/238, H01M 50/244, H01M 50/249, H01M 50/258, H01M 50/264, H01M 50/271, H01M 50/262

(54) **BATTERY PACK STRUCTURE FOR A VEHICLE**

(30) Priority: 27.02.2024 KR 20240028266
(71) Applicant: Hyundai Motor Company, Seoul 06797 (KR); Kia Corporation, Seocho-gu Seoul 06797 (KR); LG Energy Solution, Ltd., Seoul 07335 (KR)
(72) Inventor: KIM, Kyung Mo, Hwaseong-si, Gyeonggi-do 18280 (KR); KO, Gun Woo, Hwaseong-si, Gyeonggi-do 18280 (KR); LEE, Seung Yoon, Daejeon 34122 (KR); HUR, Nam Hoon, Daejeon 34122 (KR); SHIN, Ju Hwan, Daejeon 34122 (KR)
(74) Representative: Viering, Jentschura & Partner mbB Patent- und Rechtsanwälte

(57) **Abstract**

A vehicle battery pack structure includes: a lower case, a plurality of battery modules accommodated in the lower case, an upper case coupled to an upper portion of the lower case and configured to cover a space accommodating the battery modules, and a plurality of module fixing bolts configured to penetrate end plates of the battery modules and fixed to the lower case. The vehicle battery pack structure further includes: a connection support bar disposed on upper sides of the end plates so as to connect the end plates of the battery modules adjacent to each other, and a plurality of support bolts configured to respectively penetrate the upper case and the connection support bar and fixed to the end plates.

## Description

### BACKGROUND

### 1. Field

The present disclosure relates to a structure of a battery pack mounted in a vehicle.

### 2. Description of the Related Art

In general, an electric vehicle is configured to generate driving force for a vehicle using a motor, and a battery pack adopted to supply power to the motor is mounted in the electric vehicle.

The battery pack accommodates a plurality of battery modules in a battery case, and the battery modules are formed by overlapping a plurality of battery cells.

Therefore, when a total number of battery cells accommodated in the battery pack increases, a vehicle cruising range may be improved.

Meanwhile, the battery pack requires structural rigidity to firmly and stably support the battery modules, as described above. Additionally, structural rigidity of the battery pack needs to be secured so as to prevent damage to the battery cells due to external impact.

In order to secure structural rigidity of the battery pack, it is desirable to provide a plurality of reinforcing members in the battery case. However, the plurality of reinforcing members may reduce a space in which the battery cells are mounted.

Therefore, the battery pack should minimize the use of structures such as reinforcing members so as to maximize space for the battery cells while securing the necessary structural rigidity is maintained.

The information disclosed in this Background of the Disclosure section is provided only to enhance understanding of the general background of the disclosure, and should not be taken as an acknowledgement or any form of suggestion that this information forms the related art already known to a person having ordinary skill in the art.

### SUMMARY

The present disclosure has been made in view of the above problems, and it is an object of the present disclosure to provide a vehicle battery pack structure configured not only to minimize the number of structures such as reinforcing members so as to maximally accommodate battery cells in a battery case, but also to secure sufficient structural rigidity required for a battery pack.

In accordance with an aspect of the present disclosure, a battery pack structure for a vehicle includes: a lower case, a plurality of battery modules accommodated in the lower case, and an upper case coupled to an upper portion of the lower case and configured to cover a space where the battery modules are accommodated therein. The battery pack structure further includes: a plurality of module fixing bolts configured to penetrate end plates of the battery modules and fixed to the lower case, a connection support bar disposed on upper sides of the end plates so as to connect the end plates of the battery modules adjacent to each other, and a plurality of support bolts configured to respectively penetrate the upper case and the connection support bar and fixed to the end plates.

The support bolt may be fixed to the end plate, without intervening the module fixing bolt.

The lower case may include a transverse member, the end plate of the battery module may have a recessed portion formed on a lower side thereof and configured to surround an upper side of the transverse member. The module fixing bolt may penetrate the end plate and the transverse member and may be coupled to the lower case.

When the battery modules are disposed on opposite sides of the transverse member, the recessed portions of the end plates of the battery modules may be disposed symmetrically with respect to the transverse member so as to surround the transverse member. The connection support bar may be formed to have a width overlapping upper side surfaces of the end plates disposed on the opposite sides of the transverse member, and the plurality of support bolts may penetrate the connection support bar and may be respectively coupled to the end plates of two battery modules respectively disposed on the opposite sides of the transverse member, thereby connecting the two battery modules to each other.

The lower case may include a longitudinal member installed to extend in a direction perpendicular to the transverse member, and the battery modules may be disposed on opposite sides of the longitudinal member with the longitudinal member interposed therebetween. In one embodiment, the connection support bar may be formed to have a length overlapping upper side surfaces of the end plates of the battery modules disposed on the opposite sides of the longitudinal member, and the plurality of support bolts may penetrate the connection support bar and may be respectively coupled to the end plates of two battery modules disposed on the opposite sides of the longitudinal member, thereby connecting the two battery modules to each other.

In another embodiment, the lower case may include a longitudinal member extending in a direction perpendicular to the transverse member, and the battery modules may be respectively disposed at four locations around an intersection portion of the longitudinal member and the transverse member. The connection support bar may pass over an upper side of the intersection portion and may be disposed to extend in a longitudinal direction of the transverse member. In particular, a width of the connection support bar overlaps upper side surfaces of the end plates of the battery modules on opposite sides of the transverse member, and the plurality of support bolts may penetrate the connection support bar and may be respectively coupled to the end plates of the battery modules respectively disposed at the four locations around the intersection portion where the longitudinal member and the transverse member are intersecting each other, thereby connecting the battery modules respectively disposed at the four locations to each other through the connection support bar.

The lower case may include a cooling block formed to have a plurality of cooling passages, and the plurality of battery modules may be accommodated on an upper side of the cooling block. The plurality of module fixing bolts may be coupled to the cooling block of the lower case, without intervening the cooling passages.

The lower case may include a transverse member, and the end plate of the battery module may have a recessed portion formed on a lower side thereof and configured to surround an upper side of the transverse member. The module fixing bolt may penetrate the end plate and the transverse member and may be coupled to the cooling block of the lower case.

The end plate of the battery module may have an opening provided therein and configured to accommodate a head of the module fixing bolt so as to prevent the head of the module fixing bolt from protruding upwards from an upper side surface of the end plate, and the support bolt may be fixed to the end plate, without intervening the opening of the end plate.

In accordance with another aspect of the present disclosure, a vehicle battery pack structure includes: a lower case, an upper case coupled to an upper portion of the lower case, forming a space, a plurality of battery modules accommodated in the space, and an internal member installed to serve as a partition between the battery modules. The vehicle battery pack structure further includes: a plurality of module fixing bolts configured to penetrate end plates of the battery modules and fixed to the lower case, a connection support bar disposed on upper sides of the end plates so as to connect the end plates of the battery modules adjacent to each other, and a plurality of support bolts configured to respectively penetrate the upper case and the connection support bar and fixed to the end plates.

The end plate of the battery module may have a recessed portion formed on a lower side thereof and configured to surround an upper side of the internal member, and the module fixing bolt may penetrate the end plate and the internal member and may be coupled to the lower case.

The recessed portions of the end plates of the battery modules respectively disposed on opposite sides of the internal member that is disposed in parallel with the end plates of the battery modules. The recessed portions may be disposed symmetrically with respect to the internal member so as to surround the internal member, and the width of the connection support bar may overlap upper side surfaces of the end plates disposed on the opposite sides of the internal member. The plurality of support bolts may penetrate the connection support bar and may be respectively coupled to the end plates of two battery modules respectively disposed on the opposite sides of the internal member, thereby connecting the two battery modules to each other.

The connection support bar may be formed to have a length overlapping the upper sides of the end plates of the battery modules disposed on opposite sides of the internal member disposed perpendicular to the end plates of the battery modules, and the plurality of support bolts may penetrate the connection support bar and may be respectively coupled to the end plates of two battery modules disposed on the opposite sides of the internal member, thereby connecting the two battery modules to each other.

The internal member may include a longitudinal member disposed to extend in a forward-and-rearward direction of the lower case, and a transverse member disposed perpendicular to the longitudinal member and installed to extend in a transverse direction of the lower case.

The battery modules may be respectively disposed at four locations around an intersection portion of the longitudinal member and the transverse member, the connection support bar may run over an upper side of the intersection portion where the longitudinal member and the transverse member intersect each other, and the connection support bar may be disposed to extend in a longitudinal direction of the transverse member, overlapping upper side surfaces of the end plates of the battery modules respectively disposed on the opposite sides of the transverse member. The plurality of support bolts may penetrate the connection support bar and may be respectively coupled to the end plates of the battery modules respectively disposed at the four locations around the intersection portion, thereby connecting the battery modules respectively disposed at the four locations to each other through the connection support bar.

The lower case may include a cooling block formed to have a plurality of cooling passages, the plurality of battery modules may be accommodated on an upper side of the cooling block, and the plurality of module fixing bolts may be coupled to the cooling block of the lower case, without intervening the cooling passages.

The end plate of the battery module may have an opening provided therein and configured to accommodate a head of the module fixing bolt so as to prevent the head of the module fixing bolt from protruding upwards from an upper side surface of the end plate, and the support bolt may be fixed to the end plate, without intervening the opening.

### BRIEF DESCRIPTION OF THE DRAWINGS

The above and other objects, features and other advantages of the present disclosure should be more clearly understood from the following detailed description taken in conjunction with the accompanying drawings, in which:
FIG. 1 is a view showing a battery pack to which the present disclosure is applied;
FIG. 2 is a view illustrating a state in which an upper case is removed from the battery pack in FIG. 1;
FIG. 3 is a view illustrating a lower case of the battery pack in FIG. 1;
FIG. 4 is a view illustrating one of the battery modules in FIG. 2;
FIG. 5 is a view illustrating a state in which the battery module in FIG. 4 is rotated 180 degrees in the transverse plane;
FIG. 6 is an observation view in the VI direction of FIG. 4;
FIG. 7 is a cross-sectional view taken along line VII-VII in FIG. 1;
FIG. 8 is a cross-sectional view taken along line VIII-VIII in FIG. 1;
FIG. 9 is a cross-sectional view taken along line IX-IX in FIG. 1;
FIG. 10 is a detailed view of a portion A in FIG. 2;
FIG. 11 is a view in which a connection support bar is omitted in FIG. 10;
FIG. 12 is a detailed view of a portion B in FIG. 2; and
FIG. 13 is a view in which the connection support bar is omitted in FIG. 12.

### DETAILED DESCRIPTION

Hereinafter, the present disclosure is described in detail through some embodiments thereof with reference to the accompanying drawings. Wherever possible, the same reference numbers are used throughout the drawings to refer to the same or like parts, and redundant descriptions thereof have been omitted.

Hereinafter, the suffixes "module", "unit", and "part" for components used in the following description are merely provided for facilitation of preparing this specification. Therefore, the suffixes themselves do not have significant meanings or roles.

In describing the embodiments disclosed herein, when the detailed description of publicly known techniques to which the disclosure pertains may obscure the gist of the present disclosure, the detailed description has been omitted. Further, it should be understood that the accompanying drawings are merely illustrated to easily describe the embodiments disclosed in this specification, and therefore, the technical idea disclosed in this specification is not limited by the accompanying drawings. Further, it should be noted that the accompanying drawings include all modifications, equivalents, and substitutes that fall within the technical scope of the present disclosure.

Meanwhile, in the present disclosure, terms such as "first" and/or "second" may be used to describe various components, but the components are not limited by the terms. The terms are used only for the purpose of distinguishing one component from other components.

When one component is referred to as being "connected" or "joined" to another component, the one component may be directly connected or joined to the other component, but it should be understood that other components may be present therebetween. On the other hand, when the one component is referred to as being "directly connected to" or "directly in contact with" the other component, it should be understood that no other components are present therebetween.

In this specification, an expression in a singular form also includes the plural sense, unless clearly specified otherwise in context.

It should be understood that expressions such as "comprise" and "have" in this specification are intended to designate the presence of indicated features, numbers, steps, operations, components, parts, or combinations thereof, but do not exclude the presence or addition of one or more features, numbers, steps, operations, components, parts, or combinations thereof.

When a component, device, element, or the like of the present disclosure is described as having a purpose or performing an operation, function, or the like, the component, device, or element should be considered herein as being "configured to" meet that purpose or to perform that operation or function.

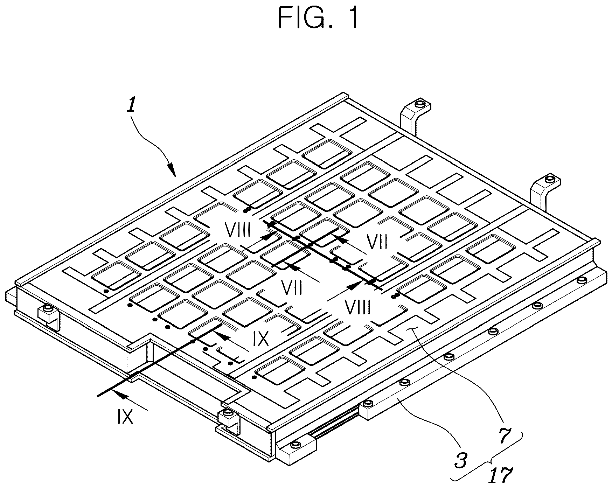

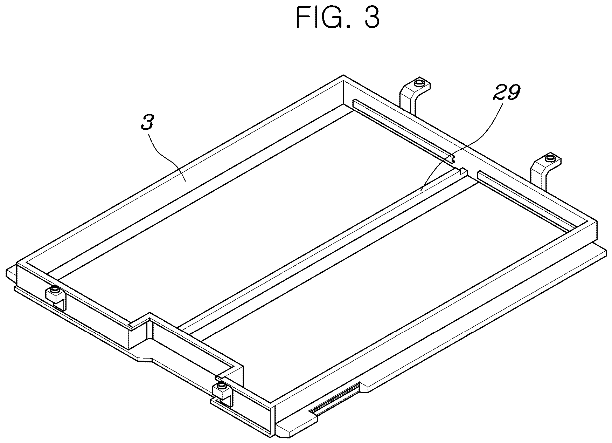

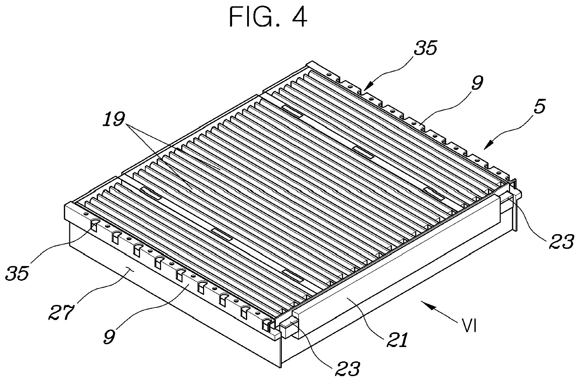

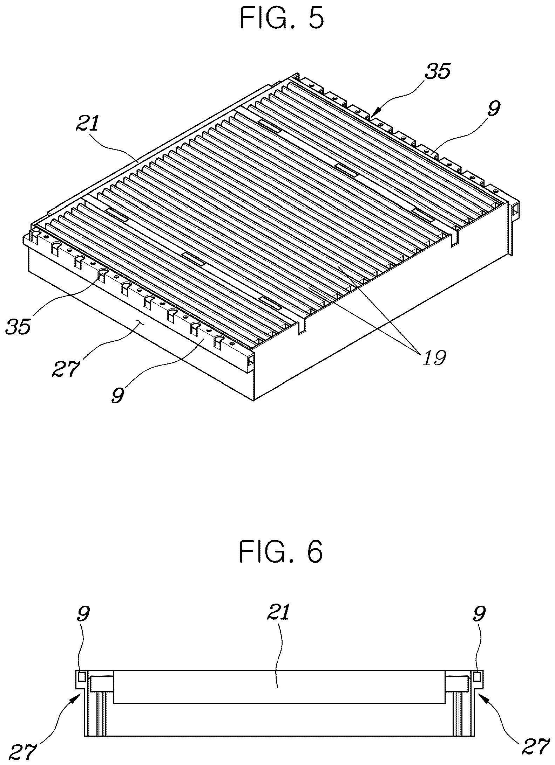

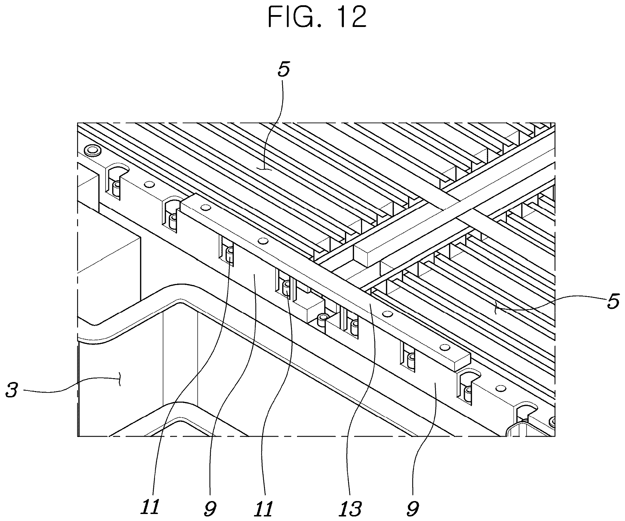

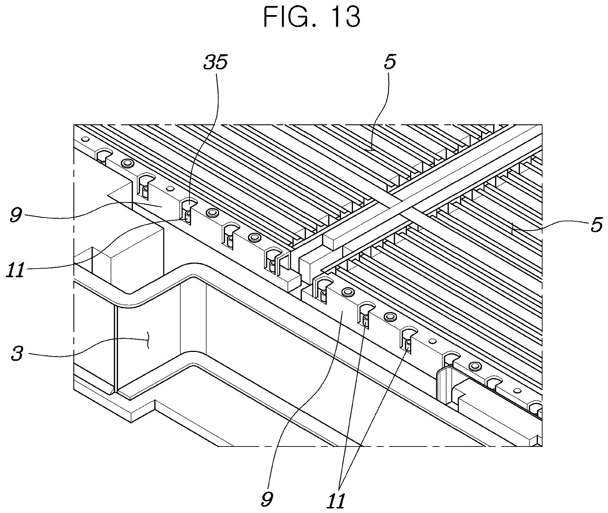

Referring to FIGs. 1-13, in at least one embodiment of the present disclosure, a structure of a vehicle battery pack 1 (i.e., a battery pack structure) includes: a lower case 3, a plurality of battery modules 5 accommodated in the lower case 3, and an upper case 7 coupled to an upper portion of the lower case 3 and configured to seal or cover a space where the battery modules 5 are accommodated therein. The structure further includes: a plurality of module fixing bolts 11 configured to penetrate end plates 9 of the battery modules 5 and fixed to the lower case 3, a connection support bar 13 disposed on the upper sides of the end plates 9 so as to connect the end plates 9 of the battery modules 5 adjacent to each other, and a plurality of support bolts 15 configured to respectively penetrate the upper case 7 and the connection support bar 13 and fixed to the end plates 9.

In other words, in the battery pack structure of the present disclosure, the plurality of battery modules 5 are accommodated in a battery accommodation space formed by the lower case 3 and the upper case 7 forming a battery case 17 and are sealed from the outside, the end plate 9 forming the battery module 5 is directly fixed to the lower case 3 by the module fixing bolt 11, and the battery modules 5 disposed adjacent to each other are connected to each other by the connection support bar 13 and the support bolt 15 and are coupled to the upper case 7, thereby implementing a stable fixing structure of the battery module 5. In this manner, the number of reinforcing members disposed in the battery accommodation space is minimized, and the number of battery cells 19 mounted in the battery accommodation space is maximized, thereby making it possible not only to improve a vehicle cruising range, but also to significantly improve durability of the battery pack.

For reference, the end plates 9 are respectively provided at the opposite ends of a plurality of battery cells 19 overlapping each other so as to form and maintain surface pressure of the internal battery cells 19. A sensing block 21 disposed to connect the opposite ends of the two end plates 9 forms an electrical connection between the overlapping battery cells 19 and performs a function of sensing temperature, voltage, and the like. Further, the sensing block 21 may include an output terminal 23 of the battery module 5.

The support bolt 15 is fixed to the end plate 9 in a state of avoiding the module fixing bolt 11 and not intervening with the module fixing bolt 11.

In other words, the support bolt 15, configured to penetrate the upper case 7 and the connection support bar 13 from the upper side of the upper case 7 and coupled to the end plate 9, may overlap or intervene the module fixing bolt 11 coupled to the lower case 3 from the upper side of the end plate 9 in the vertical direction. In order to prevent this overlapping state, the support bolt 15 is configured to be coupled to the end plate 9 at a position where the module fixing bolt 11 is not disposed.

In the embodiment, the lower case 3 is provided with a transverse member 25, the end plate 9 of the battery module 5 has a recessed portion 27 formed on the lower side thereof and configured to surround the upper side of the transverse member 25, and the module fixing bolt 11 penetrates the end plate 9 and the transverse member 25 and is coupled to the lower case 3.

Therefore, the end plate 9 surrounds the transverse member 25 adopted to reinforce structural rigidity of the lower case 3 through the recessed portion 27, and the module fixing bolt 11 is coupled to the lower case 3 in a state of penetrating not only the end plate 9 but also the transverse member 25, thereby making it possible not only to increase a space for accommodating the battery cells 19, which might otherwise be reduced by the transverse member 25, but also to secure sufficient structural rigidity of the battery pack 1.

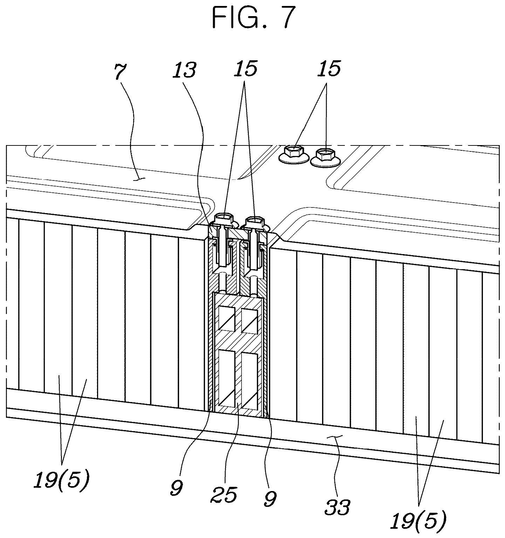

Particularly, as shown in FIG. 7, when the battery modules 5 are disposed on the opposite sides of the transverse member 25, the recessed portions 27 of the end plates 9 of the battery modules 5 are disposed symmetrically with respect to the transverse member 25 so as to surround the transverse member 25. Further, the connection support bar 13 is formed to have a width that overlaps the upper side surfaces of the end plates 9 respectively disposed on the opposite sides of the transverse member 25. Additionally, the plurality of support bolts 15 penetrate the connection support bar 13 and are respectively coupled to the end plates 9 of the two battery modules 5 respectively disposed on the opposite sides of the transverse member 25 so as to connect the two battery modules 5 to each other.

Therefore, a space occupied by the transverse member 25 is substantially small between the two battery modules 5 disposed with the transverse member 25 interposed therebetween. In this manner, the battery modules 5 may be configured to include an greater number of battery cells 19.

Additionally, in the above-described structure, the two battery modules 5 are commonly connected to the transverse member 25 at the lower side of the end plate 9 and are coupled to the lower case 3. Further, the two battery modules 5 are commonly connected to the connection support bar 13 on the upper side of the end plate 9 and are coupled to the upper case 7. In this manner, it is possible not only to secure a stably fixed state of the battery modules 5 but also to increases rigidity of the battery pack.

In an embodiment, the lower case 3 is provided with a longitudinal member 29 installed to extend in a direction perpendicular to the transverse member 25. Further, the battery modules 5 are disposed on the opposite sides of the longitudinal member 29 with the longitudinal member 29 interposed therebetween. Additionally, the connection support bar 13 is formed to have a length that overlaps the upper sides of the end plates 9 of the battery modules 5 disposed on the opposite sides of the longitudinal member 29 with the longitudinal member 29 interposed therebetween. Furthermore, the plurality of support bolts 15 penetrate the connection support bar 13 and are respectively coupled to the end plates 9 of two battery modules 5 disposed on the opposite sides of the longitudinal member 29 so as to connect the two battery modules 5 to each other.

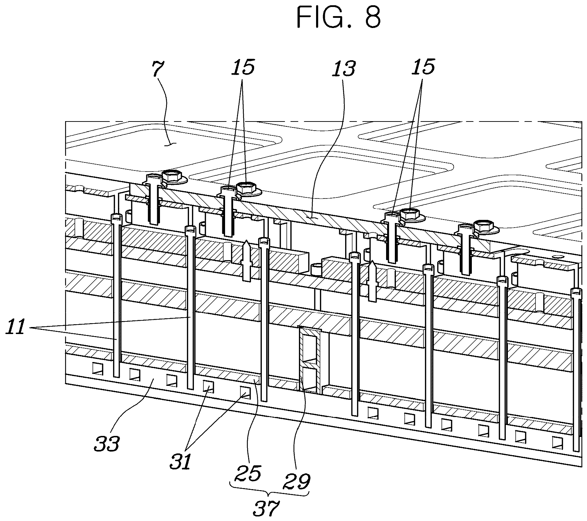

The above-described state may be confirmed with reference to FIG. 8. In this configuration as well, the end plates 9 of the two battery modules 5 disposed on the opposite sides of the longitudinal member 29 are connected to each other through the transverse member 25 at the lower side thereof and are connected to the lower case 3. Furthermore, the end plates 9 of the two battery modules 5 are connected to each other through the connection support bar 13 at the upper side thereof and are coupled to the upper case 7. In this manner, it is possible not only to secure a stably fixed state of the battery modules 5 but also to contribute to improvement in rigidity of the battery pack.

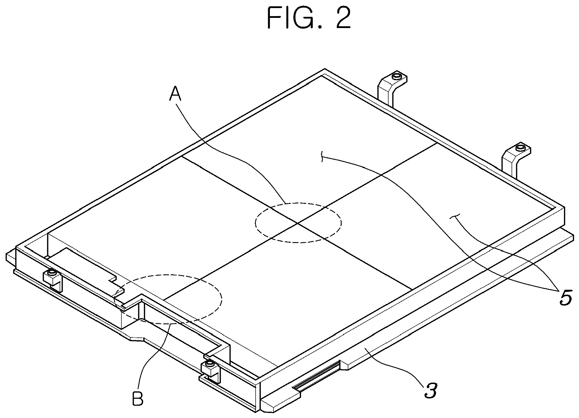

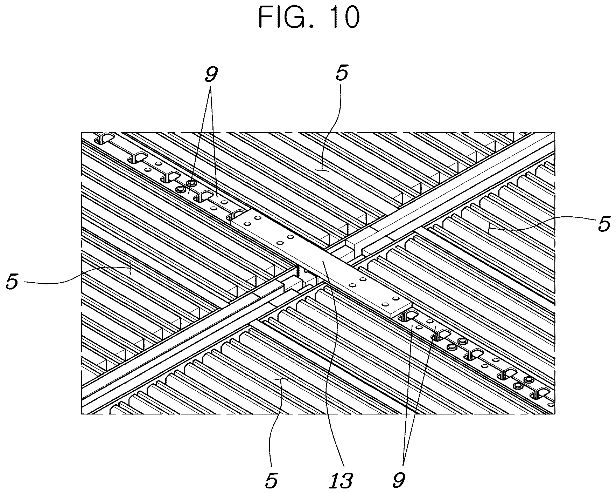

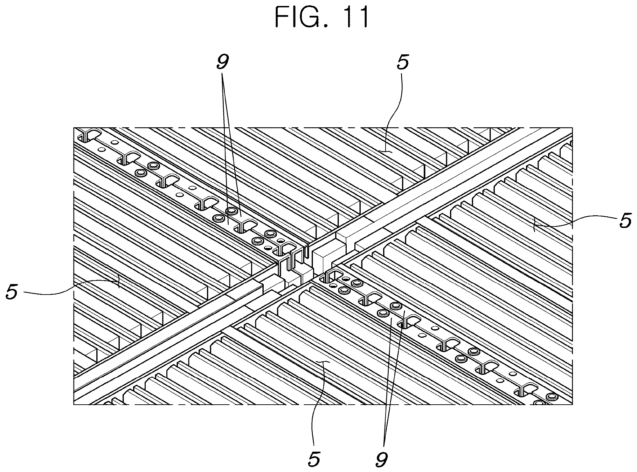

FIGs. 7 and 8 correspond to a cross section of a portion "A" in FIG. 2. More particularly, further referring to FIGs. 10 and 11, the lower case 3 includes the longitudinal member 29 extending in a direction perpendicular to the transverse member 25. Further, the battery modules 5 are arranged around the intersection portion of the longitudinal member 29 and the transverse member 25. In an embodiment, four battery modules 5 are respectively disposed four locations around the intersection area. In addition, the connection support bar 13 passes over the upper side of the intersection portion at which the longitudinal member 29 and the transverse member 25 intersect each other. The connection support bar 13 is disposed to extend in the longitudinal direction of the transverse member 25 and overlaps the upper side surfaces of the end plates 9 of the battery modules 5 respectively disposed on the opposite sides of the transverse member 25. In other words, the width of the connection support bar 13 overlaps the upper side surfaces of the end plates 9 of the battery modules 5 that are disposed on the opposite sides of the transverse member 25. Moreover, the plurality of support bolts 15 penetrate the connection support bar 13 and are respectively coupled to the end plates 9 of the battery modules 5 respectively disposed at the four locations around the intersection portion of the longitudinal member 29 and the transverse member 25, thereby achieving a structure capable of connecting the battery modules 5 respectively disposed at the four locations to each other through the connection support bar 13.

When the four battery modules 5 are disposed around the portion at which the longitudinal member 29 and the transverse member 25 intersect each other, and when the respective end plates 9 are integrally connected to each other through the transverse member 25 and the connection support bar 13, the upper sides of the end plates 9 are coupled to the upper case 7, and the lower sides thereof are coupled to the lower case, thereby making it possible not only to achieve a mutually solid fixing state between the battery modules 5, but also to improve rigidity of the battery pack.

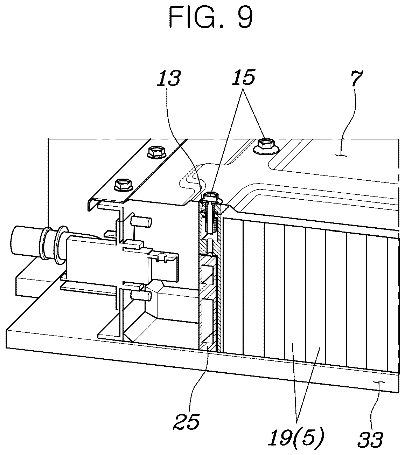

For reference, as shown in FIGs. 9, 12, and 13, the battery modules 5 may be disposed only on one side of the transverse member 25. In this embodiment, the end plate 9 of each of the battery modules 5 penetrates the transverse member 25 and is coupled to the lower case 3 through the module fixing bolt 11. The above-mentioned end plate 9 is connected to the end plate 9 of each of the other battery modules 5 disposed with the longitudinal member 29 interposed therebetween through the connection support bar 13, thereby being coupled to the upper case 7 by the support bolt 15.

In another embodiment, the lower case 3 includes a cooling block 33 having a plurality of cooling passages 31, the plurality of battery modules 5 are accommodated on the upper side of the cooling block 33, and the plurality of module fixing bolts 11 may be coupled to the cooling block 33 of the lower case 3, without intervening the cooling passages 31.

For example, the bottom of the lower case 3 may be made of an extruded material forming the cooling passage 31. In this case, the module fixing bolt 11 is configured to be coupled to a position avoiding the cooling passage 31.

In the structure described above, since the end plates 9 of the battery modules 5 are respectively disposed to surround the upper side of the longitudinal member 29 by the recessed portions 27 respectively formed on the lower sides thereof, the module fixing bolt 11 penetrates the end plate 9 and the transverse member 25 and is coupled to the cooling block 33 of the lower case 3. In this case, the module fixing bolt 11 is coupled to the cooling block 33 in a state of avoiding the cooling passage 31 of the cooling block 33.

In an embodiment, the end plate 9 of the battery module 5 has an opening 35 provided therein and configured to accommodate the head of the module fixing bolt 11 so as to prevent the head of the module fixing bolt 11 from protruding upwards from the upper side surface of the end plate 9. Further, the support bolt 15 is fixed to the end plate 9, without intervening the opening 35.

When the head of the module fixing bolt 11 does not protrude upwards from the upper side of the end plate 9 by the opening 35 formed in the end plate 9 as described above, the connection support bar 13 is fixed by the support bolt 15 between the upper case 7 and the end plate 9 in a state of being in close contact with the upper side surface of the end plate 9, thereby making it possible to obtain a reliable coupling state.

Meanwhile, the above-described present disclosure may be also described as follows.

In an embodiment of the present disclosure, the structure of the vehicle battery pack 1 (i.e., vehicle battery pack structure) includes: the lower case 3, the plurality of battery modules 5 accommodated in the lower case 3, the upper case 7 coupled to the upper portion of the lower case 3 and configured to seal the space where the battery modules 5 are accommodated therein, an internal member 37 installed to serve as a partition between the battery modules 5, and the plurality of module fixing bolts 11 configured to penetrate the end plates 9 of the battery modules 5 and fixed to the lower case 3. The vehicle battery pack structure further includes: the connection support bar 13 disposed on the upper sides of the end plates 9 of the battery modules 5 adjacent to each other so as to connect the end plates 9 to each other, and the plurality of support bolts 15 configured to respectively penetrate the upper case 7 and the connection support bar 13 and fixed to the end plates 9.

The end plate 9 of the battery module 5 is formed to have the recessed portion 27 formed on the lower side thereof and configured to surround the upper side of the internal member 37. The module fixing bolt 11 penetrates the end plate 9 and the internal member 37 and is coupled to the lower case 3.

The recessed portions 27 of the end plates 9 of the battery modules 5 are respectively disposed on the opposite sides of the internal member 37 that is disposed in parallel with the end plates 9 of the battery modules 5. In particular, the recessed portions 27 are disposed symmetrically with respect to the internal member 37 so as to surround the internal member 37. Additionally, the connection support bar 13 is formed to have a width that overlaps the upper side surfaces of the end plates 9 disposed on the opposite sides of the internal member 37. Moreover, the plurality of support bolts 15 penetrate the connection support bar 13 and are respectively coupled to the end plates 9 of the two battery modules 5 respectively disposed on the opposite sides of the internal member 37, thereby making it possible to connect the two battery modules 5 to each other.

The connection support bar 13 is formed to have a length that overlaps the upper sides of the end plates 9 of the battery modules 5 disposed on the opposite sides of the internal member 37 disposed perpendicular to the end plates 9 of the battery modules 5. The plurality of support bolts 15 penetrate the connection support bar 13 and are respectively coupled to the end plates 9 of the two battery modules 5 disposed on the opposite sides of the internal member 37, thereby making it possible to connect the two battery modules 5 to each other.

In another embodiment, the internal member 37 includes the longitudinal member 29 disposed to extend in the forward-and-rearward direction of the lower case 3 and the transverse member 25 disposed perpendicular to the longitudinal member 29 and installed to extend in the transverse direction of the lower case 3. Further, the internal member 37 may be interpreted as a type of reinforcing member to reinforce rigidity of a battery case.

Particularly, the longitudinal member 29 and the transverse member 25 are installed to linearly connect the side walls forming the outer periphery of the lower case, thereby performing a function of withstanding impact applied to the battery pack 1 from the outside.

The battery modules 5 are respectively disposed at four locations around a portion at which the longitudinal member 29 and the transverse member 25 intersect each other. Additionally, the connection support bar 13 passes through the upper side of the portion at which the longitudinal member 29 and the transverse member 25 intersect each other and is disposed to extend in the longitudinal direction of the transverse member 25 with a width thereof that overlaps the upper side surfaces of the end plates 9 of the battery modules 5 respectively disposed on the opposite sides of the transverse member 25. Further, the plurality of support bolts 15 penetrate the connection support bar 13 and are respectively coupled to the end plates 9 of the battery modules 5 respectively disposed at the four locations around the portion at which the longitudinal member 29 and the transverse member 25 intersect each other, thereby making it possible to connect the battery modules 5 respectively disposed at the four locations to each other through the connection support bar 13.

The lower case 3 includes the cooling block 33 formed to have the plurality of cooling passages 31, the plurality of battery modules 5 are accommodated on the upper side of the cooling block 33, and the plurality of module fixing bolts 11 are coupled to the cooling block 33 of the lower case 3, avoiding the cooling passages 31.

The end plate 9 of the battery module 5 has the opening 35 provided therein and configured to accommodate the head of the module fixing bolt 11 so as to prevent the head of the module fixing bolt 11 from protruding upwards from the upper side surface of the end plate 9. Further, the support bolt 15 is fixed to the end plate 9, avoiding the opening 35.

As is apparent from the above description, the present disclosure provides a vehicle battery pack structure configured not only to reduce the number of structures such as reinforcing members in order to maximally accommodate battery cells in a battery case, but also to secure sufficient structural rigidity required for a battery pack, thereby making it possible to increase a vehicle cruising range and significantly improve durability of the battery pack.

Although the some embodiments of the present disclosure have been disclosed for illustrative purposes, those having ordinary skill in the art should appreciate that various modifications, additions, and substitutions are possible, without departing from the scope of the disclosure as disclosed in the accompanying claims.

## Claims

1. A vehicle battery pack structure comprising:
a lower case;
a plurality of battery modules accommodated in the lower case;
an upper case coupled to an upper portion of the lower case and configured to cover a space where the plurality of battery modules is accommodated therein;
a plurality of module fixing bolts configured to penetrate end plates of battery modules of the plurality of battery modules and fixed to the lower case;
a connection support bar disposed on upper sides of the end plates so as to connect the end plates of the battery modules adjacent to each other; and
a plurality of support bolts configured to respectively penetrate the upper case and the connection support bar and fixed to the end plates.

2. The vehicle battery pack structure according to claim 1, wherein a support bolt of the plurality of support bolts is fixed to an end plate of the end plates, without intervening a module fixing bolt of the plurality of module fixing bolts.

3. The vehicle battery pack structure according to claim 2, wherein:
the lower case comprises a transverse member;
the end plates each have a recessed portion formed on a lower side thereof and configured to surround an upper side of the transverse member; and
the module fixing bolt penetrates the end plate and the transverse member and is coupled to the lower case.

4. The vehicle battery pack structure according to claim 3, wherein:
when the battery modules are disposed on opposite sides of the transverse member, the recessed portions of the end plates of the battery modules are disposed symmetrically with respect to the transverse member so as to surround the transverse member;
the connection support bar is formed to have a width overlapping upper side surfaces of the end plates disposed on the opposite sides of the transverse member; and
the plurality of support bolts penetrate the connection support bar and are respectively coupled to the end plates of two battery modules, among the plurality of battery modules, respectively disposed on the opposite sides of the transverse member, thereby connecting the two battery modules to each other.

5. The vehicle battery pack structure according to claim 3 or 4, wherein:
the lower case comprises a longitudinal member installed to extend in a direction perpendicular to the transverse member;
the battery modules are disposed on opposite sides of the longitudinal member with the longitudinal member interposed therebetween;
the connection support bar is formed to have a length overlapping upper side surfaces of the end plates of the battery modules disposed on the opposite sides of the longitudinal member; and
the plurality of support bolts penetrate the connection support bar and are respectively coupled to the end plates of two battery modules, among the plurality of battery modules, disposed on the opposite sides of the longitudinal member, thereby connecting the two battery modules to each other.

6. The vehicle battery pack structure according to claim 3, 4 or 5, wherein:
the lower case comprises a longitudinal member extending in a direction perpendicular to the transverse member;
the battery modules are arranged around an intersection portion of the longitudinal member and the transverse member;
the connection support bar passes over an upper side of the intersection portion and is disposed to extend in a longitudinal direction of the transverse member, wherein a width of the connection support bar overlaps upper side surfaces of the end plates of the battery modules on opposite sides of the transverse member; and
the plurality of support bolts penetrate the connection support bar and are respectively coupled to the end plates of the battery modules respectively disposed at four locations around the intersection portion, thereby connecting the battery modules respectively disposed at the four locations to each other through the connection support bar.

7. The vehicle battery pack structure according to any one of claims 2 to 6, wherein:
the lower case comprises a cooling block formed to have a plurality of cooling passages;
the plurality of battery modules are accommodated on an upper side of the cooling block; and
the plurality of module fixing bolts are coupled to the cooling block of the lower case, without intervening the plurality of cooling passages.

8. The vehicle battery pack structure according to claim 7, wherein:
the lower case comprises a transverse member;
the end plate of the battery module has a recessed portion formed on a lower side thereof and configured to surround an upper side of the transverse member; and
the module fixing bolt penetrates the end plate and the transverse member and is coupled to the cooling block of the lower case.

9. The vehicle battery pack structure of claim 1, further comprising:
an internal member installed to serve as a partition between battery modules of the plurality of battery modules.

10. The vehicle battery pack structure according to claim 9, wherein:
each end plate of the end plates has a recessed portion formed on a lower side thereof and configured to surround an upper side of the internal member; and
module fixing bolts of the plurality of module fixing bolts respectively penetrate the end plates and the internal member and are coupled to the lower case.

11. The vehicle battery pack structure according to claim 10, wherein:
the recessed portions of the end plates of the battery modules are respectively disposed on opposite sides of the internal member that is disposed in parallel with the end plates of the battery modules;
the recessed portions are disposed symmetrically with respect to the internal member so as to surround the internal member;
a width of the connection support bar overlaps upper side surfaces of the end plates disposed on the opposite sides of the internal member; and
the plurality of support bolts penetrate the connection support bar and are respectively coupled to the end plates of two battery modules, among the plurality of battery modules, respectively disposed on the opposite sides of the internal member, thereby connecting the two battery modules to each other.

12. The vehicle battery pack structure according to claim 10 or 11, wherein:
the connection support bar is formed to have a length overlapping the upper sides of the end plates of the battery modules disposed on opposite sides of the internal member disposed perpendicular to the end plates of the battery modules; and
the plurality of support bolts penetrate the connection support bar and are respectively coupled to the end plates of two battery modules, among the plurality of battery modules, disposed on the opposite sides of the internal member, thereby connecting the two battery modules to each other.

13. The vehicle battery pack structure according to claim 12, wherein the internal member comprises:
a longitudinal member disposed to extend in a forward-and-rearward direction of the lower case; and
a transverse member disposed perpendicular to the longitudinal member and installed to extend in a transverse direction of the lower case.

14. The vehicle battery pack structure according to claim 13, wherein:
the battery modules are respectively disposed at four locations around an intersection portion of the longitudinal member and the transverse member;
the connection support bar runs over an upper side of the intersection portion and is disposed to extend in a longitudinal direction of the transverse member, overlapping upper side surfaces of the end plates of the battery modules respectively disposed on the opposite sides of the transverse member; and
the plurality of support bolts penetrate the connection support bar and are respectively coupled to the end plates of the battery modules respectively disposed at the four locations, thereby connecting the battery modules respectively disposed at the four locations to each other through the connection support bar.

15. The vehicle battery pack structure according to any one of claims 9 to 14, wherein:
an end plate of the end plates has an opening provided therein and configured to accommodate a head of a module fixing bolt of the plurality of module fixing bolts so as to prevent the head of the module fixing bolt from protruding upwards from an upper side surface of the end plate; and
a support bolt of the plurality of support bolts is fixed to the end plate, without intervening the opening.
